# EUROPEAN PATENT APPLICATION

(11) **EP 4 109 258 A1**
(43) Date of publication of application: **28.12.2022**
(21) Application number: 22162720.1
(22) Date of filing: 17.03.2022
(51) Int. Cl.: G06F 9/50, G06F 15/78, G06F 11/34, G06N 20/00

(54) **METHODS AND APPARATUS TO OFFLOAD EXECUTION OF A PORTION OF A MACHINE LEARNING MODEL**

(30) Priority: 25.06.2021 US 202117359395
(71) Applicant: INTEL Corporation, Santa Clara, CA 95054 (US)
(72) Inventor: SMITH, Ned M., Beaverton, 97006 (US); GUIM BERNAT, Francesc, 08036 Barcelona (ES); KUMAR, Karthik, Chandler, 85249 (US); CHERUVU, Sunil, Tempe, 85284 (US)
(74) Representative: Maiwald GmbH

(57) **Abstract**

Methods, apparatus, systems and articles of manufacture to offload execution of a portion of a machine learning model are disclosed. An example apparatus includes processor circuitry to instantiate offload controller circuitry to select a first portion of layers of the machine learning model for execution at a first node and a second portion of the layers for remote execution for execution at a second node, model executor circuitry to execute the first portion of the layers, serialization circuitry to serialize the output of the execution of the first portion of the layers, and a network interface to transmit a request for execution of the machine learning model to the second node, the request including the serialized output of the execution of the first portion of the layers of the machine learning model and a layer identifier identifying the second portion of the layers of the machine learning model.

## Description

### FIELD OF THE DISCLOSURE

This disclosure relates generally to execution of machine learning models, and, more particularly, to methods and apparatus to offload execution of a portion of a machine learning model.

### BACKGROUND

In recent years, machine learning models have arisen to assist in solving complex problems. Execution of such machine learning models can sometimes be a resource intensive task.

### BRIEF DESCRIPTION OF THE DRAWINGS

FIG. 1 illustrates an overview of an Edge cloud configuration for Edge computing.
FIG. 2 illustrates operational layers among endpoints, an Edge cloud, and cloud computing environments.
FIG. 3 illustrates an example approach for networking and services in an Edge computing system.
FIG. 4 is a block diagram of an example node that may be used for execution of a machine learning model.
FIG. 5 is a block diagram of an example machine learning model that may be executed at least partially by the example node of FIG. 4.
FIG. 6 is a system diagram illustrating passing a request for execution of a machine learning model through various nodes of an edge network in accordance with the teachings of this disclosure.
FIG. 7 is a block diagram of an example node implemented in accordance with the teachings of this disclosure.
FIG. 8 is a flowchart representative of example of machine readable instructions that may be executed by the node of FIG. 7 to train and distribute a machine learning model.
FIG. 9 is a flowchart representative of example machine readable instructions that may be executed by the node of FIG. 7 to execute a first portion of a machine learning model and offload execution of a second portion of the machine learning model.
FIG. 10A provides an overview of example components for compute deployed at a compute node in an Edge computing system.
FIG. 10B provides a further overview of example components within a computing device in an Edge computing system.
FIG. 11 illustrates an example software distribution platform (e.g., one or more servers) to distribute software, such as the example machine readable instructions of FIG. 10B, to one or more devices, such as example processor platform(s) and/or example connected Edge devices.

The figures are not to scale. In general, the same reference numbers will be used throughout the drawing(s) and accompanying written description to refer to the same or like parts. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein, "approximately" and "about" refer to dimensions that may not be exact due to manufacturing tolerances and/or other real world imperfections. As used herein "substantially real time" refers to occurrence in a near instantaneous manner recognizing there may be real world delays for computing time, transmission, etc. Thus, unless otherwise specified, "substantially real time" refers to real time +/- 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

### DETAILED DESCRIPTION

We are entering in new era of computing in which data centers are no longer solely provided by large compute facilities (e.g., provided by cloud computing providers). New types of racks and computing form factors are being designed for new types of deployments. Specifically, because new transport technologies such as 5G and/or new types of fabrics, computation tasks may be performed in smaller data centers and/or compute locations. For example, computing resources might be made available in both cell towers as well as the central offices with computing centers having both their own differences and commonalities.

One important aspect of machine learning is the availability of different compute resources including, for example, available power (e.g., computing power). It is anticipated that the next generation of wireless base stations will be powered by solar and other renewable energies in combination with energy storage systems (e.g., batteries). This implies that further factors such as power availability, weather conditions, and workload prediction, need to be considered when making decisions related to where execution of a machine learning model should take place.

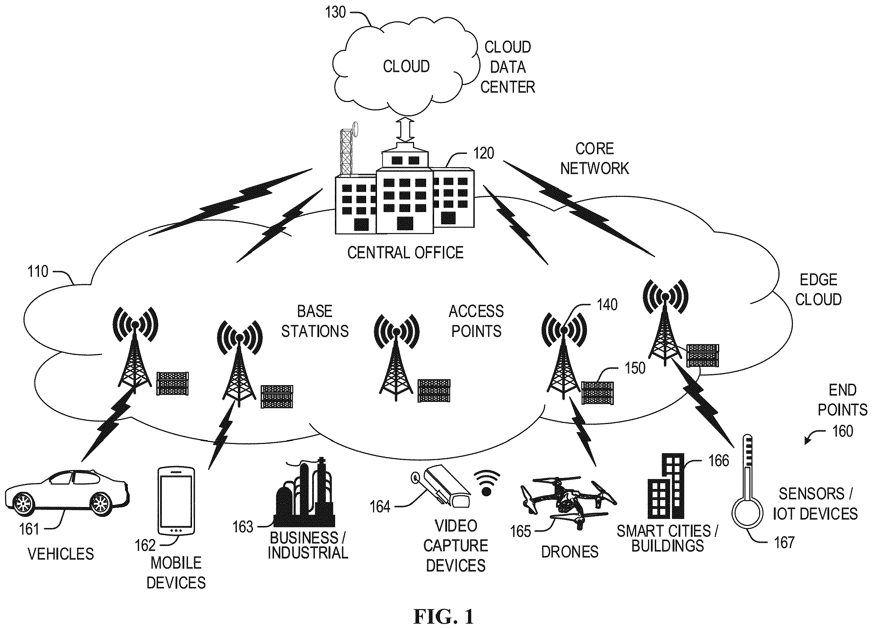

FIG. 1 is a block diagram 100 showing an overview of a configuration for Edge computing, which includes a layer of processing referred to in many of the following examples as an "Edge cloud". As shown, the Edge cloud 100 is co-located at an Edge location, such as an access point or base station 140, a local processing hub 150, or a central office 120, and thus may include multiple entities, devices, and equipment instances. The Edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and IoT devices 167, etc.) than the cloud data center 130. Compute, memory, and storage resources which are offered at the edges in the Edge cloud 110 are critical to providing ultra-low latency response times for services and functions used by the endpoint data sources 160 as well as reduce network backhaul traffic from the Edge cloud 110 toward cloud data center 130 thus improving energy consumption and overall network usages among other benefits.

Compute, memory, and storage are scarce resources, and generally decrease depending on the Edge location (e.g., fewer processing resources being available at consumer endpoint devices, than at a base station, than at a central office). However, the closer that the Edge location is to the endpoint (e.g., user equipment (UE)), the more that space and power is often constrained. Thus, Edge computing attempts to reduce the amount of resources needed for network services, through the distribution of more resources which are located closer both geographically and in network access time. In this manner, Edge computing attempts to bring the compute resources to the workload data where appropriate, or, bring the workload data to the compute resources.

The following describes aspects of an Edge cloud architecture that covers multiple potential deployments and addresses restrictions that some network operators or service providers may have in their own infrastructures. These include, variation of configurations based on the Edge location (because edges at a base station level, for instance, may have more constrained performance and capabilities in a multi-tenant scenario); configurations based on the type of compute, memory, storage, fabric, acceleration, or like resources available to Edge locations, tiers of locations, or groups of locations; the service, security, and management and orchestration capabilities; and related objectives to achieve usability and performance of end services. These deployments may accomplish processing in network layers that may be considered as "near Edge", "close Edge", "local Edge", "middle Edge", or "far Edge" layers, depending on latency, distance, and timing characteristics.

Edge computing is a developing paradigm where computing is performed at or closer to the "Edge" of a network, typically through the use of a compute platform (e.g., x86 or ARM compute hardware architecture) implemented at base stations, gateways, network routers, or other devices which are much closer to endpoint devices producing and consuming the data. For example, Edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within Edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

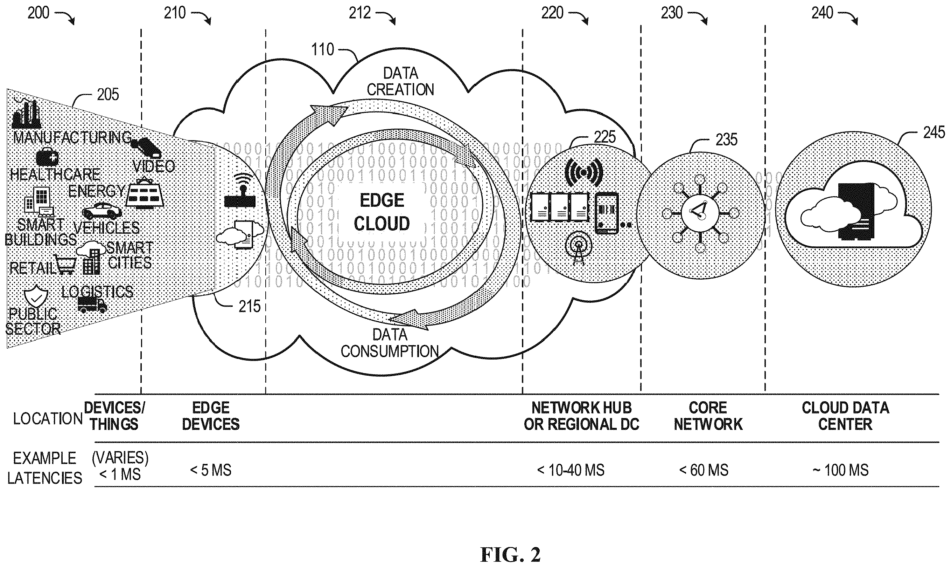

FIG. 2 illustrates operational layers among endpoints, an Edge cloud, and cloud computing environments. Specifically, FIG. 2 depicts examples of computational use cases 205, utilizing the Edge cloud 110 among multiple illustrative layers of network computing. The layers begin at an endpoint (devices and things) layer 200, which accesses the Edge cloud 110 to conduct data creation, analysis, and data consumption activities. The Edge cloud 110 may span multiple network layers, such as an Edge devices layer 210 having gateways, on-premise servers, or network equipment (nodes 215) located in physically proximate Edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the Edge cloud 110 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 200, under 5 ms at the Edge devices layer 210, to even between 10 to 40 ms when communicating with nodes at the network access layer 220. Beyond the Edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close Edge", "local Edge", "near Edge", "middle Edge", or "far Edge" layers, relative to a network source and destination. For instance, from the perspective of the core network data center 235 or a cloud data center 245, a central office or content data network may be considered as being located within a "near Edge" layer ("near" to the cloud, having high latency values when communicating with the devices and endpoints of the use cases 205), whereas an access point, base station, on-premise server, or network gateway may be considered as located within a "far Edge" layer ("far" from the cloud, having low latency values when communicating with the devices and endpoints of the use cases 205). It will be understood that other categorizations of a particular network layer as constituting a "close", "local", "near", "middle", or "far" Edge may be based on latency, distance, number of network hops, or other measurable characteristics, as measured from a source in any of the network layers 200-A240.

The various use cases 205 may access resources under usage pressure from incoming streams, due to multiple services utilizing the Edge cloud. To achieve results with low latency, the services executed within the Edge cloud 110 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, Edge computing within the Edge cloud 110 may provide the ability to serve and respond to multiple applications of the use cases 205 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of Edge computing comes the following caveats. The devices located at the Edge are often resource constrained and therefore there is pressure on usage of Edge resources. Typically, this is addressed through the pooling of memory and storage resources for use by multiple users (tenants) and devices. The Edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because Edge locations may be unmanned and may even need permissioned access (e.g., when housed in a third-party location). Such issues are magnified in the Edge cloud 110 in a multi-tenant, multi-owner, or multi-access setting, where services and applications are requested by many users, especially as network usage dynamically fluctuates and the composition of the multiple stakeholders, use cases, and services changes.

At a more generic level, an Edge computing system may be described to encompass any number of deployments at the previously discussed layers operating in the Edge cloud 110 (network layers 200-A240), which provide coordination from client and distributed computing devices. One or more Edge gateway nodes, one or more Edge aggregation nodes, and one or more core data centers may be distributed across layers of the network to provide an implementation of the Edge computing system by or on behalf of a telecommunication service provider ("telco", or "TSP"), intemet-of-things service provider, cloud service provider (CSP), enterprise entity, or any other number of entities. Various implementations and configurations of the Edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the Edge computing system does not necessarily mean that such node or device operates in a client or agent/minion/follower role; rather, any of the nodes or devices in the Edge computing system refer to individual entities, nodes, or subsystems which include discrete or connected hardware or software configurations to facilitate or use the Edge cloud 110.

As such, the Edge cloud 110 is formed from network components and functional features operated by and within Edge gateway nodes, Edge aggregation nodes, or other Edge compute nodes among network layers 210-A230. The Edge cloud 110 thus may be embodied as any type of network that provides Edge computing and/or storage resources which are proximately located to radio access network (RAN) capable endpoint devices (e.g., mobile computing devices, IoT devices, smart devices, etc.), which are discussed herein. In other words, the Edge cloud 110 may be envisioned as an "Edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

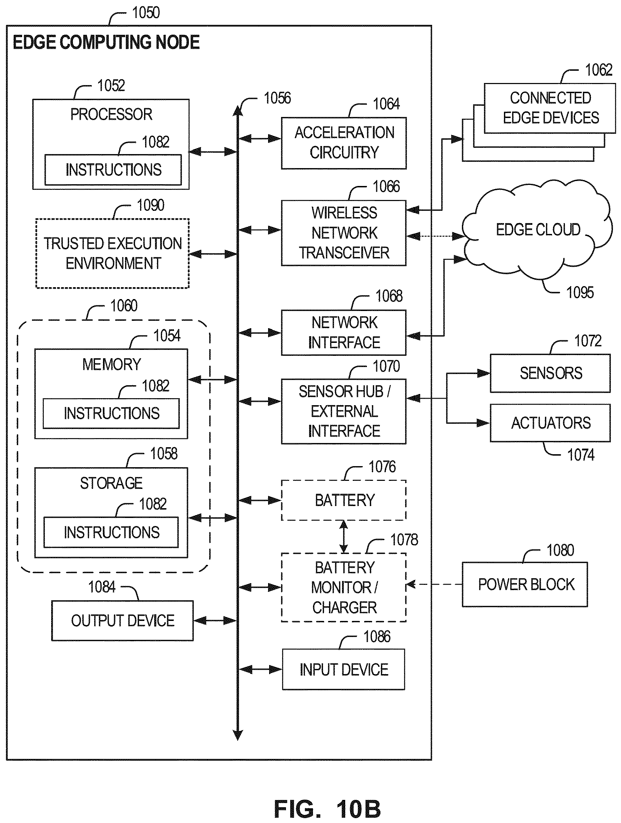

The network components of the Edge cloud 110 may be servers, multi-tenant servers, appliance computing devices, and/or any other type of computing devices. For example, the Edge cloud 110 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, Edge devices are devices presented in the network for a specific purpose (e.g., a traffic light), but may have processing and/or other capacities that may be utilized for other purposes. Such Edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 10B. The Edge cloud 110 may also include one or more servers and/or one or more multi-tenant servers. Such a server may include an operating system and implement a virtual computing environment. A virtual computing environment may include a hypervisor managing (e.g., spawning, deploying, destroying, etc.) one or more virtual machines, one or more containers, etc. Such virtual computing environments provide an execution environment in which one or more applications and/or other software, code or scripts may execute while being isolated from one or more other applications, software, code or scripts.

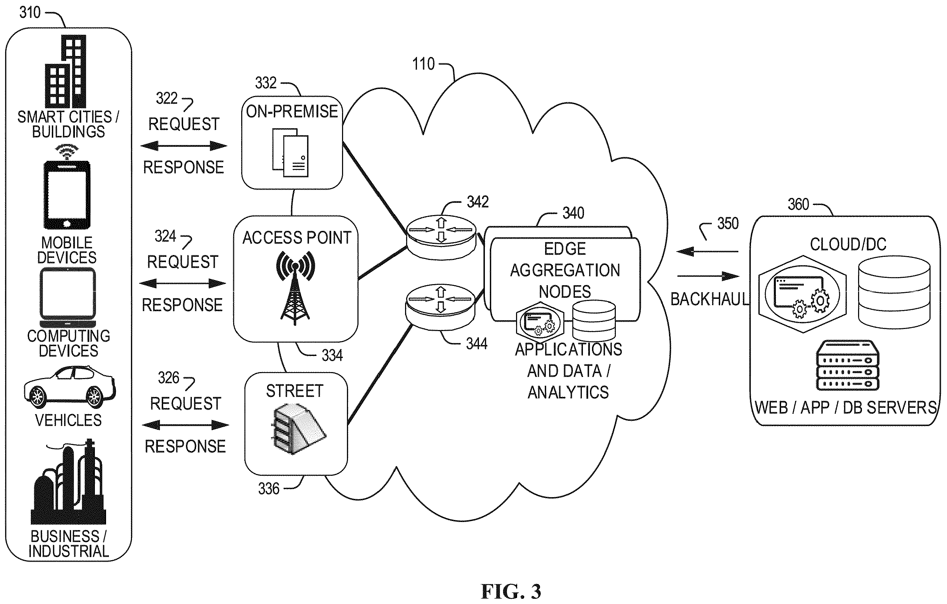

In FIG. 3, various client endpoints 310 (in the form of mobile devices, computers, autonomous vehicles, business computing equipment, industrial processing equipment) exchange requests and responses that are specific to the type of endpoint network aggregation. For instance, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the Edge cloud 110 to aggregate traffic and requests. Thus, within the Edge cloud 110, the TSP may deploy various compute and storage resources, such as at Edge aggregation nodes 340, to provide requested content. The Edge aggregation nodes 340 and other systems of the Edge cloud 110 are connected to a cloud or data center 360, which uses a backhaul network 350 to fulfill higher-latency requests from a cloud/data center for websites, applications, database servers, etc. Additional or consolidated instances of the Edge aggregation nodes 340 and the aggregation points 342, 344, including those deployed on a single server framework, may also be present within the Edge cloud 110 or other areas of the TSP infrastructure.

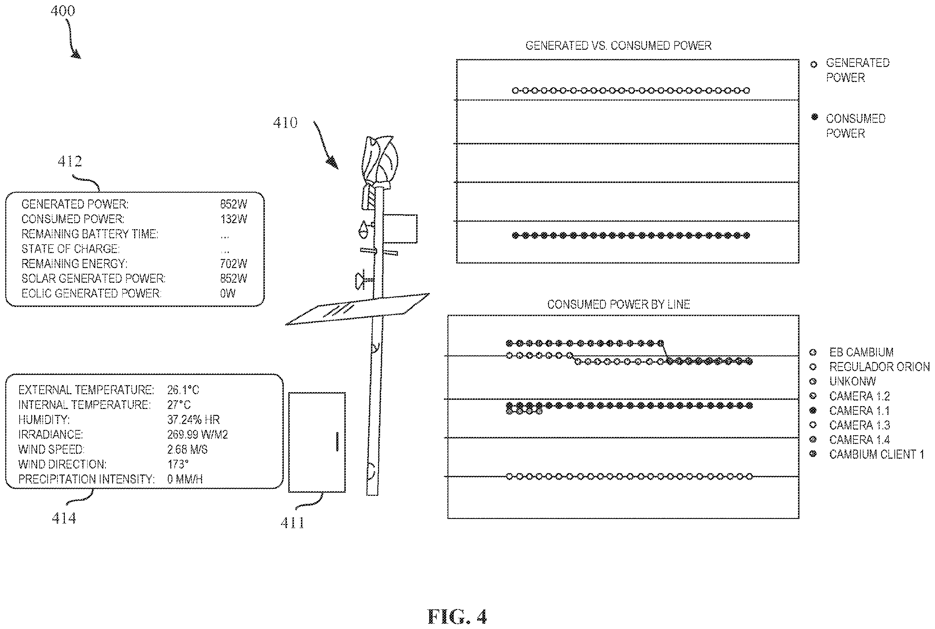

FIG. 4 is a block diagram of an example green autonomous node 410 that may be used for execution of a machine learning model. In the illustrated example of FIG. 4, the example node 410 is implemented using a cellular tower that is operated using green energy sources including, for example, solar energy, wind energy, etc. One example challenge of operating such a node is deciding how the node should operate when climate and/or other conditions do not allow for operation of equipment residing in a cabinet (e.g., cabinet 411) associated with the node 410. For example, during periods of no wind (e.g., no or low wind energy), periods of low light such as overnight and/or during severe weather (e.g., no or low solar energy) operation of particular resources of the node 410 may need to be halted and/or reduced to accommodate the reduced energy available.

In some examples, the number of users and/or applications (load) on the node can vary significantly over time. Such variance can impact the capability to finish a complex computation on the edge within a prescribed service level agreement (SLA). The variations in load and ambient conditions can also impact the telecommunications resources (e.g., bandwidth) available at the edge base station.

On the other hand, some bandwidth and compute intensive applications including, for example, machine learning applications are becoming increasingly prevalent. While training for these applications may be done in select locations (e.g., in a data center), inferencing (e.g., use of a machine learning model) may be done at edge base stations (e.g., closer to the data on which such inference is performed).

In examples disclosed herein, the example node 410 operates based on stored energy statistics 412 of the node and telemetry data 414. In some examples, the node 410 determines whether to execute a requested task (e.g., inference using a machine learning model) and/or a portion thereof. In some examples, the node 410 determines that a first portion of the machine learning model should be executed locally, and that a second portion of the machine should be executed at a remote node. In this manner, the first portion of the machine learning model is executed locally, intermediate results are provided to the remote node, and the remote node continues execution of the machine learning model based on the intermediate results.

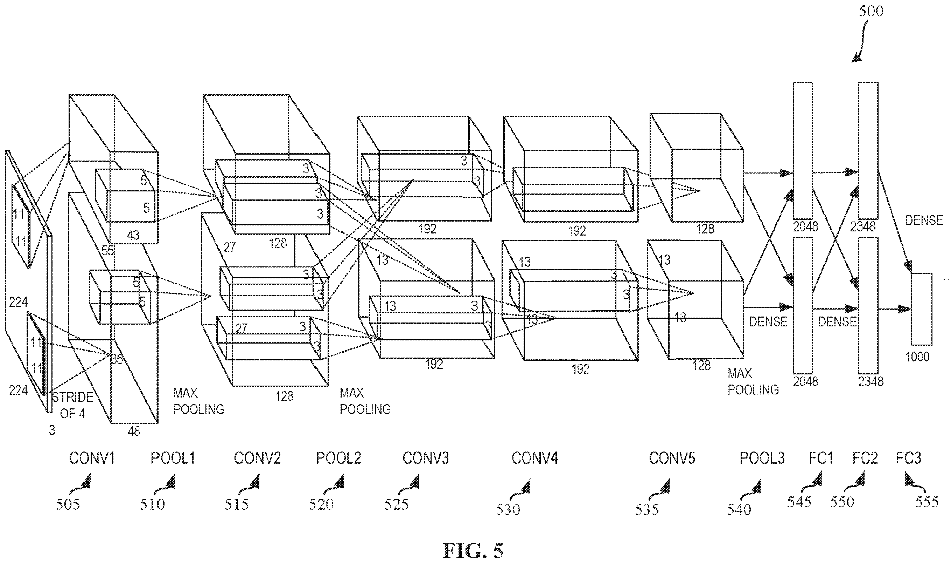

FIG. 5 is a block diagram of an example machine learning model 500 that may be executed at least partially by the example node of FIG. 4. The example machine learning model 500 of FIG. 5 includes a first layer 505 (e.g., a convolution layer), a second layer 510 (e.g., a pooling layer), a third layer 515 (e.g., a convolution layer), a fourth layer 520 (e.g., a pooling layer), a fifth layer 525 (e.g., a convolution layer), a sixth layer 530 (e.g., a convolution layer), a seventh layer 535 (e.g., a convolution layer), an eighth layer 540 (e.g., a pooling layer), a ninth layer 545 (e.g., a fully connected layer), a tenth layer 550 (e.g., a fully connected layer), and an eleventh layer 555 (e.g., a fully connected layer). While in the illustrated example of FIG. 5 eleven layers are shown using three different types of layers, any number(s) and/or type(s) of layers may additionally or alternatively be used. In general, models trained based on different training data will tend to have different arrangements, types, and/or numbers of layers. Moreover, different types of layers in a machine learning model can have different resource requirements.

Example approaches disclosed herein utilize information about the training and/or structure of the machine learning model, operational statistics about the node, and information about other nodes, to determine which components of the machine learning model should be executed at which location within the edge network. In this manner, example approaches disclosed herein utilize connectivity telemetry (such as bandwidth and/or latency) and compute/power available in the local fog or far edge to determine the best trade-off to which layers of a machine learning model should be executed on the local edge (e.g., the node 410) and which layers should be executed on the near edge (e.g., a remote node) for a particular network topology with known behavior (e.g., compute required per each layer and data bandwidth required between each pair of layers).

In some examples, layers deep within the machine learning model involve more resource intensive tasks than layers earlier in the machine learning model. To that end, it may be more efficient to perform such resource intensive tasks at the remote node than at an edge node. Separating execution of the machine learning model in such a manner may additionally be advantageous as compared to causing execution of the entire machine learning model at the remote node, as an amount of data passed between intermediate (e.g., inner) layers of the machine learning model (e.g., between the third layer 515 and the fourth layer 520) may be smaller in comparison to the input data to an earlier layer in the machine learning model (e.g., an input to the first layer 505). For example, in an image classification scenario where an input image is analyzed to determine if a vehicle is present, an input image may be ten megabytes and data passed between intermediate layers of the machine learning model may be expected to be five megabytes. Executing a first portion of the machine learning model locally and then transmitting the intermediate data (e.g., five megabytes) effectively reduces the required bandwidth for execution of the machine learning model by the remote node (e.g., as compared to simply requesting execution of the entire machine learning model by the remote node).

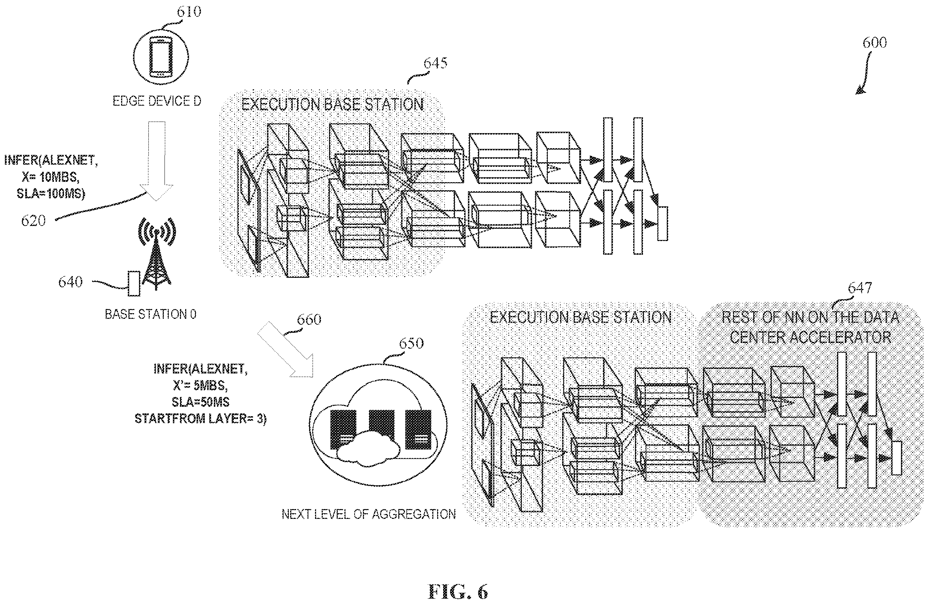

FIG. 6 is a system diagram 600 illustrating the passing of a request for execution of a machine learning model through various nodes of an edge network in accordance with the teachings of this disclosure. The example system diagram 600 includes an edge device (e.g., an IoT device, a user device, etc.) that provides a first request 620 for inference of a machine learning model (e.g., "AlexNet") and input data (X) on which the machine learning model should be executed (e.g., 10MB of data) to a node 640 for execution. In some examples, the first request 610 identifies an SLA for completion of the request.

The example node 640 analyzes the first request 620, metadata about the execution of the requested machine learning model, available telemetry information about the node 640, and, in some examples, the requested SLA, to determine that a first portion of the machine learning model 645should be executed at the node 640, and that a second and/or subsequent portion 647 should be executed at a remote node 650. The example node 640 performs execution of the first portion of the machine learning model 645 and creates intermediate data that is used to resume execution of the model. The example node 640 transmits a second request 660 to the remote node 650. The second request 660 identifies the layer at which the execution of the machine learning model is to begin, and the intermediate data (X') that is to be used to begin execution of the machine learning model at the identified layer.

In the illustrated example of FIG. 6, the example node 640 and the remote node 650 are physically separated. Such physical separation may be identified based on the use of different power supplies by the example node 640 and the remote node 650. For example, whereas the example node 640 may be operated on renewable energy sources (e.g., a battery and a solar cell), the example remote node 650 may be operated on mains power and, therefore, the example node 640 and the remote node 650 are considered separate. While in the illustrated example of FIG. 6, the example node 640 and the remote node 650 are considered separate due to a physical distance between the nodes, nodes may be considered separate for any other reason.

As used herein, nodes may be separate when there is at least one of a physical or logical division between the nodes. For example, two nodes might be separate even if they are implemented at a same physical location (e.g., multiple nodes implemented within the cabinet 411 of FIG. 4, operated by a same power source and/or power supply), but utilize different physical compute (e.g., processor) resources and/or different physical memory resources. Moreover, two nodes might be separate even if implemented using one or more shared physical resources, but have a logical division between access to those resources (e.g., by use of a container, a virtual machine, etc.). In some examples, separate nodes may share some physical and/or logical resources including, for example, a shared processor (e.g., the processor 1052 of FIG. 10B), shared memory (e.g., the memory 1054 and/or the storage 1082 of FIG. 10B), shared input/output devices (e.g., the output device 1084 of FIG. 10B, the input device 1086 of FIG. 10B), shared power supplies (e.g., the power block 1080 of FIG. 10B, the batter monitor/charger 1078 of FIG. 10B, the battery 1076 of FIG. 10B), shared acceleration circuitry (e.g., the acceleration circuitry 1064 of FIG. 10B), shared security devices (e.g., the trusted execution environment 1090 of FIG. 10B), shared interface circuitry (e.g., the wireless network transceiver 1066 of FIG. 10B, the network interface 1068 of FIG. 10B, the sensor hub/external interface 1070 of FIG. 10B), a shared memory domain, a shared security domain, etc.

In examples disclosed herein, depending on the current available bandwidth from a first node (e.g., node 640) to the next level of aggregation (e.g., the remote node 650), the current load on the first node, the first node estimates how many layers are to be executed at the first node, and how many layers are to be executed at a remote node to optimize the power consumed locally. Furthermore, in some examples, the first node takes into account that the SLA for the request has to be kept (e.g., a maximum amount of time used to complete the requested computation).

Once the decision is made concerning how much of the machine learning model is to be executed locally versus remote, the first node (e.g., node 640) will execute the input up until the corresponding layer of the model is reached, and send the intermediate data and the ID of the next layer to be executed to the remote node. In the illustrated example of FIG. 6, the node 640 may determine that given the current bandwidth between the node 640 and the remote node 650 and utilization of the compute resources at the node 640, the most efficient approach is to execute the model until through a second layer and then request the remote node 650 to compute the remaining layers. Hence, the second request 660 represents the sending of the output of the second layer, an identifier of the model to be executed, and a layer from which execution is to resume to the remote node 650. Such an approach reduces the data to be transferred between the node 640 and the remote node 650 as opposed to had the entire execution of the model been offloaded to the remote node 650. The remote node 650 then carries out the remainder of the inference, and provides the result of execution to the node 640, which may then act upon that result and/or may provide the result to the edge device 610. In some examples, if the node 640 is completely free or bandwidth to the central office is too small, the node 640 may determine that it is more efficient to execute the entire model locally at the node 640 (e.g., without the involvement of the remote node 650).

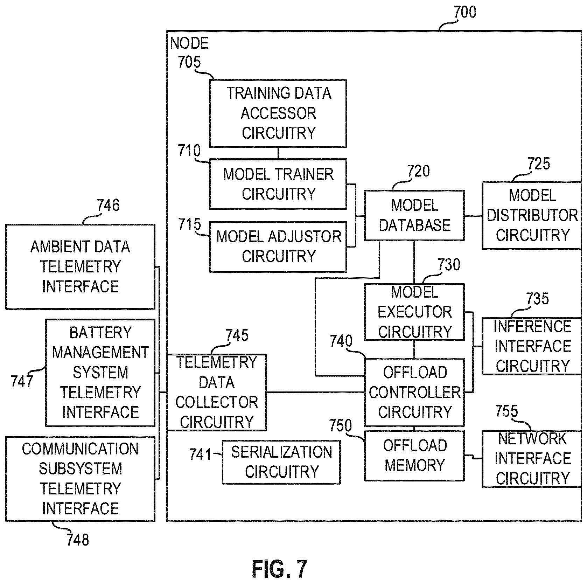

FIG. 7 is a block diagram of an example node 700 implemented in accordance with the teachings of this disclosure. The example node 700 of the illustrated example includes training data accessor circuitry 705, model trainer circuitry 710, model adjustor circuitry 715, a model database 720, model distributor circuitry 725, model executor circuitry 730, an inference interface circuitry 735, offload controller circuitry 740, serialization circuitry 741, telemetry data collector circuitry 745, an offload memory 750, and a network interface circuitry 755. The example telemetry data collector circuitry 745 communicates with telemetry sources including, for example, an ambient data telemetry interface 746, a battery management system telemetry interface 747, and a communication subsystem telemetry interface 748.

In the illustrated example of FIG. 7, the example node 700 may be used to implement, separately, a local node (e.g., the node 640 of FIG. 6) or a remote node (e.g., the remote node 650 of FIG. 6). That is, the node 700 of FIG. 7 includes components for both execution of a machine learning model (or a portion thereof), and sending of a request for execution of a portion of a machine learning model. However, in some examples, a node may be implemented without model training capabilities (e.g., without the training data accessor circuitry 705, the model trainer circuitry 710, and/or the model adjustor circuitry 715). In some examples, training of a machine learning model is a resource intensive task that may be better reserved for nodes with additional resources (e.g., the remote node 650 of FIG. 6).

The example training data accessor circuitry 705 of the illustrated example of FIG. 7 accesses training data to be used to train a machine learning model. In some examples, the training data accessed by the training data accessor circuitry 705 may be stored locally at the node 700, may be retrieved by the training data accessor circuitry 705 from a remote location (e.g., a remote data storage location such as, for example, a remote server), and/or may be provided to the node by a device requesting that training be performed (e.g., another node, an edge device, etc.). In some examples, the training data is provided in a labeled state such that training of the machine learning model is performed in a supervised manner. That is, the training data may include labels that enable the example model trainer circuitry 710 to train a model to produce a desired output given a particular input. However, in some examples, the training data may be provided in an un-labeled state, and the example model trainer circuitry 710 may perform unsupervised training of the machine learning model.

The example model trainer circuitry 710 of the illustrated example of FIG. 7 trains a machine learning model based on the training data. In examples disclosed herein, the model trainer circuitry 710 trains the model using a stochastic gradient descent training algorithm. However, any other algorithm and/or approach to training a machine learning model may additionally or alternatively be used. As a result of the training, the example model trainer circuitry 710 creates a model that may be used by the model executor circuitry 730 to process input data to create a desired output. In general, the machine learning model will include multiple layers (e.g., as shown in FIG. 5).

The example model adjustor circuitry 715 of the illustrated example of FIG. 7 inserts offloading points intermediate layers of the machine learning model. In examples disclosed herein, an offloading point is inserted intermediate each layer of the machine learning model. However, in some examples, some sets of layers might not have offloading points inserted. The example model adjustor circuitry 715 may determine that an offloading point should not be inserted based on, for example, types of operations performed across sequences of layers (e.g., two or more sequential layers). For example, offloading points might not be inserted between sequential pooling layers.

The example model adjustor circuitry 715 generates layer-specific metadata for each layer in the machine learning model. The layer specific metadata enables a computation of how much time and/or energy will be required to execute the layer given different resources (e.g., at a local node or at a remote node). In some examples, the layer specific metadata is obtained by causing execution of the machine learning model (e.g., using a portion of the training data), and measuring performance statistics (e.g., an amount of energy consumed, an amount of time consumed, etc.) to complete execution of each layer. In some examples, the compute resources used at the time of measurement are used in computing the layer specific metadata. While in examples disclosed herein, the model adjustor circuitry 715 generates layer-specific metadata for each layer of the model, in some examples, the model adjustor circuitry 715 generates metadata that corresponds to layers intermediate each of the inserted offloading points. For example, if multiple layers appeared between two offloading points, the metadata generated for those multiple layers may be combined to represent the sequence of those multiple layers.

The example model database 720 of the illustrated example of FIG. 7 is implemented by any memory, storage device and/or storage disc for storing data such as, for example, flash memory, magnetic media, optical media, solid state memory, hard drive(s), thumb drive(s), etc. Furthermore, the data stored in the example model database 720 may be in any data format such as, for example, binary data, comma delimited data, tab delimited data, structured query language (SQL) structures, etc. While, in the illustrated example, the model database 720 is illustrated as a single device, the example model database 720 and/or any other data storage devices described herein may be implemented by any number and/or type(s) of memories. In the illustrated example of FIG. 7, the example model database 720 stores models trained by the model trainer circuitry 710 and/or adjusted by the model adjustor circuitry 715. In some examples, the model database 720 stores models received via the model distributor circuitry 725. In this manner, models trained at a remote node may be stored at the model database 720 for local execution of the model by the model executor circuitry 730.

The example model distributor circuitry 725 of the illustrated example of FIG. 7 distributes the machine learning model to other nodes for execution. In distributing the machine learning model, the example model distributor 725 also distributes the layer-specific metadata, thereby enabling nodes to which the model is distributed to make layer-specific determinations about where a portion of the machine learning model is to be executed.

The example model executor circuitry 730 of the illustrated example of FIG. 7 executes a selected model from the model database 720. In examples disclosed herein, the model executor circuitry 730 may begin at a first layer of the machine learning model (e.g., a default layer), or may start at any other selected layer.

The example inference interface circuitry 735 of the illustrated example of FIG. 7 receives a request to execute a selected model using input data. (Block 905). In some examples, the request additionally identifies a service level agreement (SLA) that is to be met in association with the request. The SLA may indicate that a response is to be received within a threshold amount of time (e.g., 100 milliseconds). A different SLA may be requested based on, for example, the task to be performed in association with execution of the machine learning model. For example, time sensitive tasks associated with, for example, autonomous driving, may require a quicker response than a less time sensitive task. Upon completion of the execution of the machine learning model (potentially starting at the

The example offload controller circuitry 740 of the illustrated example of FIG. 7 estimates resource requirements for local and remote execution of each layer of the machine learning model. In examples disclosed herein, the local and remote resource requirements are estimated based on compute capabilities of the local and remote nodes, respectively, as well as the layer-specific metadata associated with each layer of the model. Using the estimated local and remote resource requirements computed in connection with each layer of the machine learning model, the example offload controller circuitry 740 selects a location for execution of each layer. In examples disclosed herein, the selection of where to execute each layer of the machine learning model is based on information collected by the telemetry data collector circuitry 745 including, for example, ambient data (e.g., temperature information, weather information, other processing commitments of the node, etc.), power information (e.g., battery statistics, present power input information, projected power input information, etc.), communications information (e.g., current bandwidth information, estimated transmission delays to transmit an expected amount of data expected to be intermediate each layer, etc.). If, for example, a given layer in the machine learning model were expected to consume an amount of energy greater than the amount of energy available to the local node, the example offload controller circuitry 740 selects a different node (e.g., the remote node) for execution of that layer of the machine learning model.

The example serialization circuitry 741 of the illustrated example of FIG. 7 serializes the output of a layer of the machine learning model and/or de-serializes an input for a layer of the machine learning model. In examples disclosed herein, serialization transforms the data from a first format that is more readily used intermediate layers of the machine learning model to a second format that is more readily used for transmission of the data. In some examples, the serialization of the data may include compression of the data to reduce a bandwidth requirement for transmitting the data to a remote location for execution. De-serialization of the data transforms the data from a format that is more readily used for transmission of the data to a format that is more readily used as an input to the selected layer of the machine learning model. In some examples, the de-serialization may involve de-compression of the data.

The example telemetry data collector circuitry 745 of the illustrated example of FIG. 7 obtains telemetry information from various telemetry interfaces available to the node 700 including, for example, ambient data from the example ambient data telemetry interface 746 (e.g., temperature information, weather information, other processing commitments of the node, etc.), power information from the battery management system telemetry interface 747 (e.g., battery statistics, present power input information, projected power input information, etc.), communications information from the example communication subsystem telemetry interface 748 (e.g., current bandwidth information, estimated transmission delays to transmit an expected amount of data expected to be intermediate each layer, etc.), etc.

The example offload memory 750 of the illustrated example of FIG. 7 of the illustrated example of FIG. 7 is implemented by any memory, storage device and/or storage disc for storing data such as, for example, flash memory, magnetic media, optical media, solid state memory, hard drive(s), thumb drive(s), etc. Furthermore, the data stored in the example offload memory 750 may be in any data format such as, for example, binary data, comma delimited data, tab delimited data, structured query language (SQL) structures, etc. While, in the illustrated example, the offload memory 750 is illustrated as a single device, the example offload memory 750 and/or any other data storage devices described herein may be implemented by any number and/or type(s) of memories. In the illustrated example of FIG. 7, the example offload memory 750 stores information related to an offloaded request including, for example, the data that is to be used as an input for the execution of the offloaded request, an identifier of the node to which the offloaded request was sent, an identifier of the offload request, an identifier of the device that originated the initial request that generated the offload request., etc.

The example network interface circuitry 755 of the illustrated example of FIG. 7 is implemented by an Ethernet network interface but may additionally or alternatively be implemented using any other type of interface that enables the node 700 to communicate with other nodes (e.g., remote nodes, edge nodes, etc.)

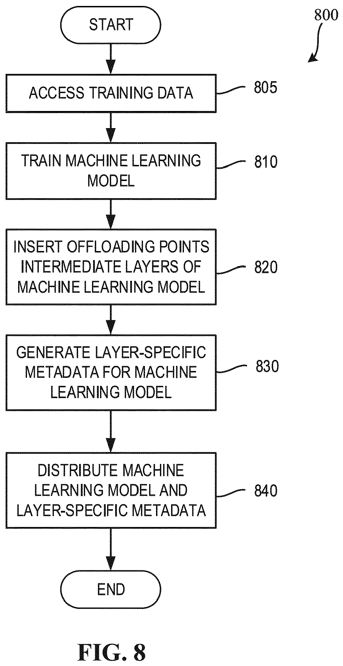

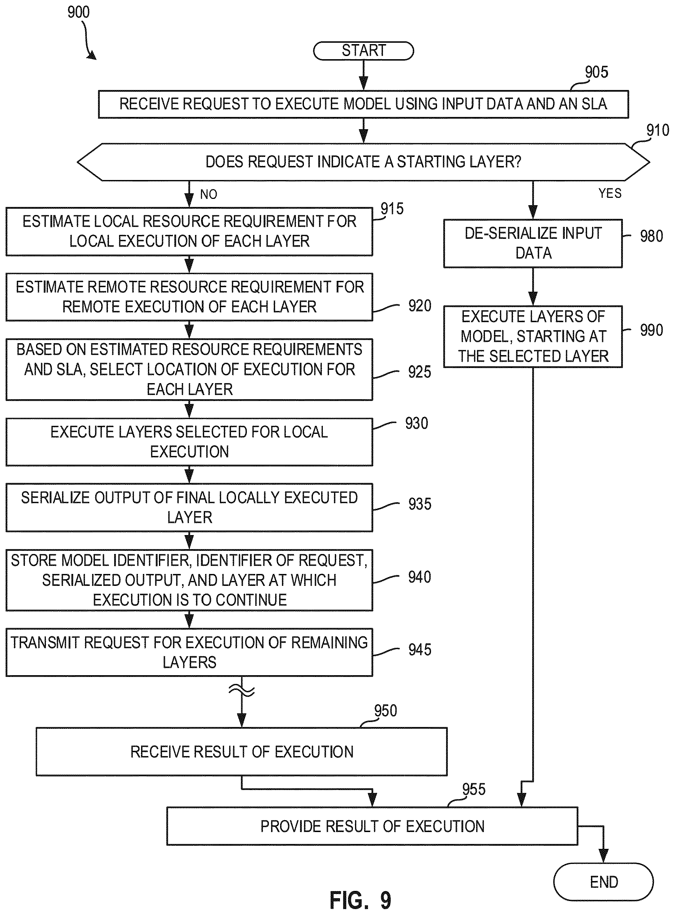

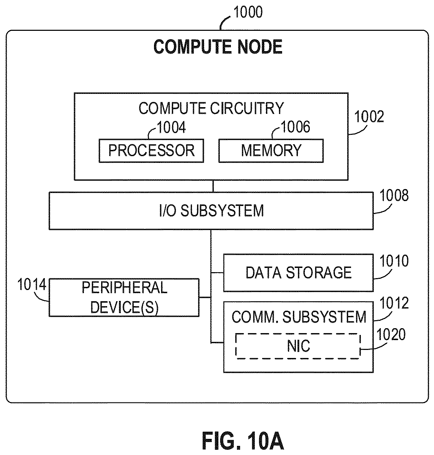

In some examples, the node includes means for accessing, means for selecting, means for executing, means for serializing, and means for transmitting. For example, the means for accessing may be implemented by the inference interface circuitry 735, the means for selecting may be implemented by offload controller circuitry 740, the means for executing may be implemented by model executor circuitry 730, the means for serializing may be implemented by serialization circuitry 741, and the means for transmitting may be implemented by the network interface circuitry 755. In some examples, the example training data accessor circuitry 705, the example model trainer circuitry 710, the example model adjustor circuitry 715, the example model distributor circuitry 725, the example model executor circuitry 730, the example inference interface circuitry 735, the example offload controller circuitry 740, the example serialization circuitry 741, the example telemetry data collector 745, the example offload memory 750, the example network interface circuitry 755 may be implemented by machine executable instructions such as that implemented by at least the blocks of FIGS. 8 and/or 9 executed by processor circuitry, which may be implemented by the example processor circuitry 1004 of FIG. 10A, the example processor circuitry 1050 of FIG. 10B, and/or the example acceleration circuitry 1064 of FIG. 10B. In other examples, example training data accessor circuitry 705, the example model trainer circuitry 710, the example model adjustor circuitry 715, the example model distributor circuitry 725, the example model executor circuitry 730, the example inference interface circuitry 735, the example offload controller circuitry 740, the example serialization circuitry 741, the example telemetry data collector 745, the example offload memory 750, the example network interface circuitry 755 is implemented by other hardware logic circuitry, hardware implemented state machines, and/or any other combination of hardware, software, and/or firmware. For example, example training data accessor circuitry 705, the example model trainer circuitry 710, the example model adjustor circuitry 715, the example model distributor circuitry 725, the example model executor circuitry 730, the example inference interface circuitry 735, the example offload controller circuitry 740, the example serialization circuitry 741, the example telemetry data collector 745, the example offload memory 750, the example network interface circuitry 755 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

While an example manner of implementing the node is illustrated in FIG. 7, one or more of the elements, processes, and/or devices illustrated in FIG. 7 may be combined, divided, re-arranged, omitted, eliminated, and/or implemented in any other way. Further, the example training data accessor circuitry 705, the example model trainer circuitry 710, the example model adjustor circuitry 715, the example model distributor circuitry 725, the example model executor circuitry 730, the example inference interface circuitry 735, the example offload controller circuitry 740, the example serialization circuitry 741, the example telemetry data collector 745, the example offload memory 750, the example network interface circuitry 755, and/or, more generally, the example node 700 of FIG. 7, may be implemented by hardware, software, firmware, and/or any combination of hardware, software, and/or firmware. Thus, for example, any of the example training data accessor circuitry 705, the example model trainer circuitry 710, the example model adjustor circuitry 715, the example model distributor circuitry 725, the example model executor circuitry 730, the example inference interface circuitry 735, the example offload controller circuitry 740, the example serialization circuitry 741, the example telemetry data collector 745, the example offload memory 750, the example network interface circuitry 755, and/or, more generally, the example node 700 of FIG. 7 could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). When reading any of the apparatus or system claims of this patent to cover a purely software and/or firmware implementation, at least one of the example training data accessor circuitry 705, the example model trainer circuitry 710, the example model adjustor circuitry 715, the example model distributor circuitry 725, the example model executor circuitry 730, the example inference interface circuitry 735, the example offload controller circuitry 740, the example serialization circuitry 741, the example telemetry data collector 745, the example offload memory 750, the example network interface circuitry 755, and/or, more generally, the example node 700 of FIG. 7 is/are hereby expressly defined to include a non-transitory computer readable storage device or storage disk such as a memory, a digital versatile disk (DVD), a compact disk (CD), a Blu-ray disk, etc., including the software and/or firmware. Further still, the example node 700 of FIG. 7 may include one or more elements, processes, and/or devices in addition to, or instead of, those illustrated in FIG. 7, and/or may include more than one of any or all of the illustrated elements, processes and devices.

Flowcharts representative of example hardware logic circuitry, machine readable instructions, hardware implemented state machines, and/or any combination thereof for implementing the node 700 of FIG. 7 are shown in FIGS. 8 and/or 9. The machine readable instructions may be one or more executable programs or portion(s) of an executable program for execution by processor circuitry, such as the processor 1004 shown in the example compute node 1000 discussed below in connection with FIGS. 10A and/or 10B. The program may be embodied in software stored on one or more non-transitory computer readable storage media such as a CD, a floppy disk, a hard disk drive (HDD), a DVD, a Blu-ray disk, a volatile memory (e.g., Random Access Memory (RAM) of any type, etc.), or a non-volatile memory (e.g., FLASH memory, an HDD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Further, although the example program is described with reference to the flowcharts illustrated in FIGS. 8 and/or 9, many other methods of implementing the example node 700 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 8 and/or 9 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 8 is a flowchart representative example of machine readable instructions that may be executed by the node of FIG. 7 to train and distribute a machine learning model. The example process of FIG. 7 begins when the training data accessor circuitry 705 accesses training data. (Block 805). In some examples, the training data accessed by the training data accessor circuitry 705 may be stored locally at the node 700, may be retrieved by the training data accessor circuitry 705 from a remote location (e.g., a remote data storage location such as, for example, a remote server), and/or may be provided to the node by a device requesting that training be performed (e.g., another node, an edge device, etc.). In some examples, the training data is provided in a labeled state such that training of the machine learning model is performed in a supervised manner. That is, the training data may include labels that enable the example model trainer circuitry 710 to train a model to produce a desired output given a particular input. However, in some examples, the training data may be provided in an un-labeled state, and the example model trainer circuitry 710 may perform unsupervised training of the machine learning model.

The example model trainer circuitry 710 trains a machine learning model based on the training data. (Block 810). In examples disclosed herein, the model trainer circuitry 710 trains the model using a stochastic gradient descent training algorithm. However, any other algorithm and/or approach to training a machine learning model may additionally or alternatively be used. As a result of the training, the example model trainer circuitry 710 creates a model that may be used by the model executor circuitry 730 to process input data to create a desired output. In general, the machine learning model will include multiple layers (e.g., as shown in FIG. 5).

The example model adjustor circuitry 715 inserts offloading points intermediate layers of the machine learning model. (Block 820). In examples disclosed herein, an offloading point is inserted intermediate each layer of the machine learning model. However, in some examples, some sets of layers might not have offloading points inserted. The example model adjustor circuitry 715 may determine that an offloading point should not be inserted based on, for example, types of operations performed across sequences of layers (e.g., two or more sequential layers). For example, offloading points might not be inserted between sequential pooling layers.

The example model adjustor circuitry 715 generates layer-specific metadata for each layer in the machine learning model. (Block 830). The layer specific metadata enables a computation of how much time and/or energy will be required to execute the layer given different resources (e.g., at a local node or at a remote node). In some examples, the layer specific metadata is obtained by causing execution of the machine learning model (e.g., using a portion of the training data), and measuring performance statistics (e.g., an amount of energy consumed, an amount of time consumed, etc.) to complete execution of each layer. In some examples, the compute resources used at the time of measurement are used in computing the layer specific metadata. While in examples disclosed herein, the model adjustor circuitry 715 generates layer-specific metadata for each layer of the model, in some examples, the model adjustor circuitry 715 generates metadata that corresponds to layers intermediate each of the inserted offloading points. For example, if multiple layers appeared between two offloading points, the metadata generated for those multiple layers may be combined to represent the sequence of those multiple layers. The trained model, including the offloading points and the layer-specific metadata, is stored in the model database 720.

The example model distributor 725 distributes the machine learning model to other nodes for execution. (Block 840). In distributing the machine learning model, the example model distributor 725 also distributes the layer-specific metadata, thereby enabling nodes to which the model is distributed to make layer-specific determinations about where a portion of the machine learning model is to be executed. The example process 800 of FIG. 8 then terminates, but may be re-executed upon, for example, a request to perform additional training being received.

FIG. 9 is a flowchart representative example machine readable instructions that may be executed by the node of FIG. 7 to execute at least a portion of a machine learning model. The example process of FIG. 9 begins at block 905, where the inference interface circuitry 735 receives a request to execute a selected model using input data. (Block 905). In some examples, the request additionally identifies a service level agreement (SLA) that is to be met in association with the request. The SLA may indicate that a response is to be received within a threshold amount of time (e.g., 100 milliseconds). A different SLA may be requested based on, for example, the task to be performed in association with execution of the machine learning model. For example, time sensitive tasks associated with, for example, autonomous driving, may require a quicker response than a less time sensitive task.

The example offload controller circuitry 740 determines whether the request indicates a starting layer for execution of the model. (Block 910). When an initial request for execution of a machine learning model is received (e.g., a first request generated by the edge device 610 of FIG. 6), the initial request will not usually request that execution start at a layer other than the first layer. However, if a prior node (e.g., the node 640 of FIG. 6) had already performed execution of a portion of the machine learning model (e.g., by way of execution of an instance of the process 900 of FIG. 9), then the request for execution of the machine learning model may include a starting layer. As an example, the first request 620 of FIG. 6 does not request that execution begin at a starting layer, whereas the second request 660 of FIG. 6 does request that execution begin at a selected starting layer (e.g., represented by the "StartFromLayer" property of the second request 660 of FIG. 6).

If the received request does not indicate a starting layer (e.g., block 910 returns a result of NO), the example offload controller circuitry 740 determines that execution should start from the first layer (e.g., a default starting point). The example offload controller circuitry 740 estimates local resource requirements for local execution of each layer of the machine learning model. (Block 915). The example offload controller circuitry 740 estimates remote resource requirements for remote execution of each layer of the machine learning model. (Block 920). In examples disclosed herein, the local and remote resource requirements are estimated based on compute capabilities of the local and remote nodes, respectively, as well as the layer-specific metadata associated with each layer of the model.

Using the estimated local and remote resource requirements computed in connection with each layer of the machine learning model, the example offload controller circuitry 740 selects a location for execution of each layer. (Block 925). In examples disclosed herein, the selection of where to execute each layer of the machine learning model is based on information collected by the telemetry data collector circuitry 745 including, for example, ambient data (e.g., temperature information, weather information, other processing commitments of the node, etc.), power information (e.g., battery statistics, present power input information, projected power input information, etc.), communications information (e.g., current bandwidth information, estimated transmission delays to transmit an expected amount of data expected to be intermediate each layer, etc.). If, for example, a given layer in the machine learning model were expected to consume an amount of energy greater than the amount of energy available to the local node, the example offload controller circuitry 740 selects a different node (e.g., the remote node) for execution of that layer of the machine learning model.

In examples disclosed herein, the locations are selected as either a first node (e.g., the local node), or a second node (e.g., the remote node). Moreover, the locations for execution are selected in association with contiguous portions of the machine learning model. For example, a first portion corresponding to the first through fourth layers of the machine learning model is selected for execution at a first node (e.g., the local node), while a second portion corresponding to the fifth through final layers of the machine learning model is selected for execution at a second node (e.g., the remote node). However, in some examples, multiple locations for execution may be identified. For example, it may be determined that it is more efficient to have a first portion executed at a first node, a second portion executed at a second node, and a third portion executed at a third node. In some examples, the third node is the same as the first node. In this manner, execution of a middle portion of the machine learning model may be sent to a second node (e.g., a remote node), while an initial portion and a final portion of the machine learning model are each executed at a first node (e.g., a local node). Such an approach may be more resource efficient if, for example, the second portion were known to be more compute intensive.

In examples disclosed herein, it is typically more efficient to perform initial processing of the input data at the local node, as those initial layers of machine learning models typically result in a significant reduction on the amount of data that must be transmitted to enable continuation of the execution of the machine learning model. In this manner, the offload controller circuitry 740 selects a first portion of the machine learning model for local execution, and a second portion of the machine learning model for remote execution. Note that in some examples, the second portion of the machine learning model may then later be re-segmented by the remote node (or other node) for execution at subsequent remote nodes.

Having selected a first portion of the model for local execution, the example model executor circuitry 730 executes the layers included in the first portion of the model. (Block 930). The example serialization circuitry 741 then serializes the output of the final locally executed layer. (Block 935). The serialized output, a model identifier, and a layer at which execution of the model is to continue are stored in the offload memory 750. (Block 940). In examples disclosed herein, serialization transforms the data from a first format that is more readily used intermediate layers of the machine learning model to a second format that is more readily used for transmission of the data. In some examples, the serialization of the data may include compression of the data to reduce a bandwidth requirement for transmitting the data to a remote location for execution. In some examples, an identifier of the request is additionally stored. The identifier of the request may enable, for example, the local node to identify where the result of the execution should be provided.

The example network interface circuitry 755, in response to an offload request being stored in the offload memory 750, transmits a subsequent request for execution of the remaining layers to the remote node. (Block 945). In examples disclosed herein, the request to the remote node includes an identifier of the model to be executed, the serialized output, and a layer at which execution of the model is to begin. In some examples, the request additionally identifies an SLA that is to be met for execution of the model.

The example network interface circuitry 755 awaits the result of the execution of the machine learning model by the remote node. Upon completion of the execution of the model by the remote node, the example network interface circuitry 755 receives the result of the execution of the machine learning model. (Block 950). The example inference interface circuitry 735 then provides the result of the execution of the machine learning model to the requesting device. (Block 955). In some examples, the requesting device may be the initial device that originated the request (e.g., the edge device of FIG. 6). However, in some other examples, the requesting device may be another device such as, for example the node 640 of FIG. 6 (e.g., when the instructions of FIG. 9 are executed at the remote node 650 of FIG. 6).

Returning to block 910, if the request indicates a starting layer (e.g., block 910 returns a result of YES), then this means that this a second (or possibly subsequent) request for execution of a portion of the machine learning model. That is, the received request represents a request for execution of an offloaded portion of the machine learning model. The example serialization circuitry 741 de-serializes the data received as part of the request. (Block 980). De-serialization of the data transforms the data from a format that is more readily used for transmission of the data to a format that is more readily used as an input to the selected layer of the machine learning model. In some examples, the de-serialization may involve de-compression of the data. While this de-serialized data was previously considered the output of the prior layer of the machine learning model, this data will be used as the input for the subsequent layer of the machine learning model. (Block 980). The de-serialized input data is then used as the input to the starting layer of the machine learning model. The example model executor circuitry 730 continues execution of the machine learning model at the identified starting layer. (Block 990). After execution of the remainder of the machine learning model, the inference interface circuitry 735 provides the result of the execution of the machine learning model to the requesting node. In some examples, this may cause a process of the requesting node to resume at block 950. In this manner, blocks 980 and 990 represent execution of the offloaded portion of the machine learning model (e.g., when the instructions 900 of FIG. 9 are executed by a remote node).

In further examples, any of the compute nodes or devices discussed with reference to the present Edge computing systems and environment may be fulfilled based on the components depicted in FIGS. 10A and 10B. Respective Edge compute nodes may be embodied as a type of device, appliance, computer, or other "thing" capable of communicating with other Edge, networking, or endpoint components. For example, an Edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 10A, an Edge compute node 1000 includes a compute engine (also referred to herein as "compute circuitry") 1002, an input/output (I/O) subsystem 1008, data storage 1010, a communication circuitry subsystem 1012, and, optionally, one or more peripheral devices 1014. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 1000 may be embodied as any type of engine, device, or collection of devices capable of performing various compute functions. In some examples, the compute node 1000 may be embodied as a single device such as an integrated circuit, an embedded system, a field-programmable gate array (FPGA), a system-on-a-chip (SOC), or other integrated system or device. In the illustrative example, the compute node 1000 includes or is embodied as a processor 1004 and a memory 1006. The processor 1004 may be embodied as any type of processor capable of performing the functions described herein (e.g., executing an application). For example, the processor 1004 may be embodied as a multi-core processor(s), a microcontroller, a processing unit, a specialized or special purpose processing unit, or other processor or processing/controlling circuit.

In some examples, the processor 1004 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 1004 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, storage disks, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 1004 may work in coordination with each other to execute many types of operations and instructions within and on behalf of the compute node 1000.

The memory 1006 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. (for example, Single-Level Cell ("SLC"), Multi-Level Cell ("MLC"), Quad-Level Cell ("QLC"), Tri-Level Cell ("TLC"), or some other NAND). In some examples, the memory device includes a byte-addressable write-in-place three dimensional crosspoint memory device, or other byte addressable write-in-place non-volatile memory (NVM) devices, such as single or multi-level Phase Change Memory (PCM) or phase change memory with a switch (PCMS), NVM devices that use chalcogenide phase change material (for example, chalcogenide glass), resistive memory including metal oxide base, oxygen vacancy base and Conductive Bridge Random Access Memory (CB-RAM), nanowire memory, ferroelectric transistor random access memory (FeTRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, a combination of any of the above, or other suitable memory. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 1006 may be integrated into the processor 1004. The memory 1006 may store various software and data used during operation such as one or more applications, data operated on by the application(s), libraries, and drivers.

In some examples, resistor-based and/or transistor-less memory architectures include nanometer scale phase-change memory (PCM) devices in which a volume of phase-change material resides between at least two electrodes. Portions of the example phase-change material exhibit varying degrees of crystalline phases and amorphous phases, in which varying degrees of resistance between the at least two electrodes can be measured. In some examples, the phase-change material is a chalcogenide-based glass material. Such resistive memory devices are sometimes referred to as memristive devices that remember the history of the current that previously flowed through them. Stored data is retrieved from example PCM devices by measuring the electrical resistance, in which the crystalline phases exhibit a relatively lower resistance value(s) (e.g., logical "0") when compared to the amorphous phases having a relatively higher resistance value(s) (e.g., logical "1").

Example PCM devices store data for long periods of time (e.g., approximately 10 years at room temperature). Write operations to example PCM devices (e.g., set to logical "0", set to logical "1", set to an intermediary resistance value) are accomplished by applying one or more current pulses to the at least two electrodes, in which the pulses have a particular current magnitude and duration. For instance, a long low current pulse (SET) applied to the at least two electrodes causes the example PCM device to reside in a low-resistance crystalline state, while a comparatively short high current pulse (RESET) applied to the at least two electrodes causes the example PCM device to reside in a high-resistance amorphous state.

In some examples, implementation of PCM devices facilitates non-von Neumann computing architectures that enable in-memory computing capabilities. Generally speaking, traditional computing architectures include a central processing unit (CPU) communicatively connected to one or more memory devices via a bus. As such, a finite amount of energy and time is consumed to transfer data between the CPU and memory, which is a known bottleneck of von Neumann computing architectures. However, PCM devices minimize and, in some cases, eliminate data transfers between the CPU and memory by performing some computing operations in-memory. Stated differently, PCM devices both store information and execute computational tasks. Such non-von Neumann computing architectures may implement vectors having a relatively high dimensionality to facilitate hyperdimensional computing, such as vectors having 10,000 bits. Relatively large bit width vectors enable computing paradigms modeled after the human brain, which also processes information analogous to wide bit vectors.

The compute circuitry 1002 is communicatively coupled to other components of the compute node 1000 via the I/O subsystem 1008, which may be embodied as circuitry and/or components to facilitate input/output operations with the compute circuitry 1002 (e.g., with the processor 1004 and/or the main memory 1006) and other components of the compute circuitry 1002. For example, the I/O subsystem 1008 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 1008 may form a portion of a system-on-a-chip (SoC) and be incorporated, along with one or more of the processor 1004, the memory 1006, and other components of the compute circuitry 1002, into the compute circuitry 1002.

The one or more illustrative data storage devices/disks 1010 may be embodied as one or more of any type(s) of physical device(s) configured for short-term or long-term storage of data such as, for example, memory devices, memory, circuitry, memory cards, flash memory, hard disk drives, solid-state drives (SSDs), and/or other data storage devices/disks. Individual data storage devices/disks 1010 may include a system partition that stores data and firmware code for the data storage device/disk 1010. Individual data storage devices/disks 1010 may also include one or more operating system partitions that store data files and executables for operating systems depending on, for example, the type of compute node 1000.

The communication circuitry 1012 may be embodied as any communication circuit, device, or collection thereof, capable of enabling communications over a network between the compute circuitry 1002 and another compute device (e.g., an Edge gateway of an implementing Edge computing system). The communication circuitry 1012 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 1012 includes a network interface controller (NIC) 1020, which may also be referred to as a host fabric interface (HFI). The NIC 1020 may be embodied as one or more add-in-boards, daughter cards, network interface cards, controller chips, chipsets, or other devices that may be used by the compute node 1000 to connect with another compute device (e.g., an Edge gateway node). In some examples, the NIC 1020 may be embodied as part of a system-on-a-chip (SoC) that includes one or more processors, or included on a multichip package that also contains one or more processors. In some examples, the NIC 1020 may include a local processor (not shown) and/or a local memory (not shown) that are both local to the NIC 1020. In such examples, the local processor of the NIC 1020 may be capable of performing one or more of the functions of the compute circuitry 1002 described herein. Additionally, or alternatively, in such examples, the local memory of the NIC 1020 may be integrated into one or more components of the client compute node at the board level, socket level, chip level, and/or other levels.

Additionally, in some examples, a respective compute node 1000 may include one or more peripheral devices 1014. Such peripheral devices 1014 may include any type of peripheral device found in a compute device or server such as audio input devices, a display, other input/output devices, interface devices, and/or other peripheral devices, depending on the particular type of the compute node 1000. In further examples, the compute node 1000 may be embodied by a respective Edge compute node (whether a client, gateway, or aggregation node) in an Edge computing system or like forms of appliances, computers, subsystems, circuitry, or other components.

In a more detailed example, FIG. 10B illustrates a block diagram of an example of components that may be present in an Edge computing node 1050 for implementing the techniques (e.g., operations, processes, methods, and methodologies) described herein. This Edge computing node 1050 provides a closer view of the respective components of node 1000 when implemented as or as part of a computing device (e.g., as a mobile device, a base station, server, gateway, etc.). The Edge computing node 1050 may include any combinations of the hardware or logical components referenced herein, and it may include or couple with any device usable with an Edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the Edge computing node 1050, or as components otherwise incorporated within a chassis of a larger system.

The Edge computing device 1050 may include processing circuitry in the form of a processor 1052, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 1052 may be a part of a system on a chip (SoC) in which the processor 1052 and other components are formed into a single integrated circuit, or a single package, such as the Edison^{™} or Galileo^{™} SoC boards from Intel Corporation, Santa Clara, California. As an example, the processor 1052 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 1052 and accompanying circuitry may be provided in a single socket form factor, multiple socket form factor, or a variety of other formats, including in limited hardware configurations or configurations that include fewer than all elements shown in FIG. 10B.

The processor 1052 may communicate with a system memory 1054 over an interconnect 1056 (e.g., a bus). Any number of memory devices may be used to provide for a given amount of system memory. As examples, the memory 754 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 1058 may also couple to the processor 1052 via the interconnect 1056. In an example, the storage 1058 may be implemented via a solid-state disk drive (SSDD). Other devices that may be used for the storage 1058 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 1058 may be on-die memory or registers associated with the processor 1052. However, in some examples, the storage 1058 may be implemented using a micro hard disk drive (HDD). Further, any number of new technologies may be used for the storage 1058 in addition to, or instead of, the technologies described, such resistance change memories, phase change memories, holographic memories, or chemical memories, among others.

The components may communicate over the interconnect 1056. The interconnect 1056 may include any number of technologies, including industry standard architecture (ISA), extended ISA (EISA), peripheral component interconnect (PCI), peripheral component interconnect extended (PCIx), PCI express (PCIe), or any number of other technologies. The interconnect 1056 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 1056 may couple the processor 1052 to a transceiver 1066, for communications with the connected Edge devices 1062. The transceiver 1066 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected Edge devices 1062. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 1066 (or multiple transceivers) may communicate using multiple standards or radios for communications at a different range. For example, the Edge computing node 1050 may communicate with close devices, e.g., within about 10 meters, using a local transceiver based on Bluetooth Low Energy (BLE), or another low power radio, to save power. More distant connected Edge devices 1062, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 1066 (e.g., a radio transceiver) may be included to communicate with devices or services in a cloud (e.g., an Edge cloud 1095) via local or wide area network protocols. The wireless network transceiver 1066 may be a low-power wide-area (LPWA) transceiver that follows the IEEE 802.15.4, or IEEE 802.15.4g standards, among others. The Edge computing node 1050 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 1066, as described herein. For example, the transceiver 1066 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 1066 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 1068 may be included to provide a wired communication to nodes of the Edge cloud 1095 or to other devices, such as the connected Edge devices 1062 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 1068 may be included to enable connecting to a second network, for example, a first NIC 1068 providing communications to the cloud over Ethernet, and a second NIC 1068 providing communications to other devices over another type of network.

Given the variety of types of applicable communications from the device to another component or network, applicable communications circuitry used by the device may include or be embodied by any one or more of components 1064, 1066, 1068, or 1070. Accordingly, in various examples, applicable means for communicating (e.g., receiving, transmitting, etc.) may be embodied by such communications circuitry.

The Edge computing node 1050 may include or be coupled to acceleration circuitry 1064, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific Edge computing tasks for service management and service operations discussed elsewhere in this document.

The interconnect 1056 may couple the processor 1052 to a sensor hub or external interface 1070 that is used to connect additional devices or subsystems. The devices may include sensors 1072, such as accelerometers, level sensors, flow sensors, optical light sensors, camera sensors, temperature sensors, global navigation system (e.g., GPS) sensors, pressure sensors, barometric pressure sensors, and the like. The hub or interface 1070 further may be used to connect the Edge computing node 1050 to actuators 1074, such as power switches, valve actuators, an audible sound generator, a visual warning device, and the like.

In some optional examples, various input/output (I/O) devices may be present within or connected to, the Edge computing node 1050. For example, a display or other output device 1084 may be included to show information, such as sensor readings or actuator position. An input device 1086, such as a touch screen or keypad may be included to accept input. An output device 1084 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the Edge computing node 1050. A display or console hardware, in the context of the present system, may be used to provide output and receive input of an Edge computing system; to manage components or services of an Edge computing system; identify a state of an Edge computing component or service; or to conduct any other number of management or administration functions or service use cases.

A battery 1076 may power the Edge computing node 1050, although, in examples in which the Edge computing node 1050 is mounted in a fixed location, it may have a power supply coupled to an electrical grid, or the battery may be used as a backup or for temporary capabilities. The battery 1076 may be a lithium ion battery, or a metal-air battery, such as a zinc-air battery, an aluminum-air battery, a lithium-air battery, and the like.

A battery monitor/charger 1078 may be included in the Edge computing node 1050 to track the state of charge (SoCh) of the battery 1076, if included. The battery monitor/charger 1078 may be used to monitor other parameters of the battery 1076 to provide failure predictions, such as the state of health (SoH) and the state of function (SoF) of the battery 1076. The battery monitor/charger 1078 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 1078 may communicate the information on the battery 1076 to the processor 1052 over the interconnect 1056. The battery monitor/charger 1078 may also include an analog-to-digital (ADC) converter that enables the processor 1052 to directly monitor the voltage of the battery 1076 or the current flow from the battery 1076. The battery parameters may be used to determine actions that the Edge computing node 1050 may perform, such as transmission frequency, mesh network operation, sensing frequency, and the like.

A power block 1080, or other power supply coupled to a grid, may be coupled with the battery monitor/charger 1078 to charge the battery 1076. In some examples, the power block 1080 may be replaced with a wireless power receiver to obtain the power wirelessly, for example, through a loop antenna in the Edge computing node 1050. A wireless battery charging circuit, such as an LTC4020 chip from Linear Technologies of Milpitas, California, among others, may be included in the battery monitor/charger 1078. The specific charging circuits may be selected based on the size of the battery 1076, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 1058 may include instructions 1082 in the form of software, firmware, or hardware commands to implement the techniques described herein. Although such instructions 1082 are shown as code blocks included in the memory 1054 and the storage 1058, it may be understood that any of the code blocks may be replaced with hardwired circuits, for example, built into an application specific integrated circuit (ASIC).

In an example, the instructions 1082 provided via the memory 1054, the storage 1058, or the processor 1052 may be embodied as a non-transitory, machine-readable medium 1060 including code to direct the processor 1052 to perform electronic operations in the Edge computing node 1050. The processor 1052 may access the non-transitory, machine-readable medium 1060 over the interconnect 1056. For instance, the non-transitory, machine-readable medium 1060 may be embodied by devices described for the storage 1058 or may include specific storage units such as storage devices and/or storage disks that include optical disks (e.g., digital versatile disk (DVD), compact disk (CD), CD-ROM, Blu-ray disk), flash drives, floppy disks, hard drives (e.g., SSDs), or any number of other hardware devices in which information is stored for any duration (e.g., for extended time periods, permanently, for brief instances, for temporarily buffering, and/or caching). The non-transitory, machine-readable medium 1060 may include instructions to direct the processor 1052 to perform a specific sequence or flow of actions, for example, as described with respect to the flowchart(s) and block diagram(s) of operations and functionality depicted above. As used herein, the terms "machine-readable medium" and "computer-readable medium" are interchangeable. As used herein, the term "non-transitory computer-readable medium" is expressly defined to include any type of computer readable storage device and/or storage disk and to exclude propagating signals and to exclude transmission media.

Also in a specific example, the instructions 1082 on the processor 1052 (separately, or in combination with the instructions 1082 of the machine readable medium 1060) may configure execution or operation of a trusted execution environment (TEE) 1090. In an example, the TEE 1090 operates as a protected area accessible to the processor 1052 for secure execution of instructions and secure access to data. Various implementations of the TEE 1090, and an accompanying secure area in the processor 1052 or the memory 1054 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 1050 through the TEE 1090 and the processor 1052.

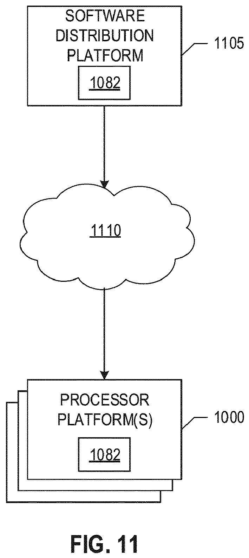

Figure 11 illustrates an example software distribution platform 1105 to distribute software, such as the example computer readable instructions 1082 of FIG. 10B, to one or more devices, such as example processor platform(s) 1100 and/or example connected Edge devices. The example software distribution platform 1105 may be implemented by any computer server, data facility, cloud service, etc., capable of storing and transmitting software to other computing devices (e.g., third parties, the example connected Edge devices of FIG. 3). Example connected Edge devices may be customers, clients, managing devices (e.g., servers), third parties (e.g., customers of an entity owning and/or operating the software distribution platform 1105). Example connected Edge devices may operate in commercial and/or home automation environments. In some examples, a third party is a developer, a seller, and/or a licensor of software such as the example computer readable instructions 1082 of FIG. 10B. The third parties may be consumers, users, retailers, OEMs, etc. that purchase and/or license the software for use and/or re-sale and/or sub-licensing. In some examples, distributed software causes display of one or more user interfaces (UIs) and/or graphical user interfaces (GUIs) to identify the one or more devices (e.g., connected Edge devices) geographically and/or logically separated from each other (e.g., physically separated IoT devices chartered with the responsibility of water distribution control (e.g., pumps), electricity distribution control (e.g., relays), etc.).

In the illustrated example of FIG. 11, the software distribution platform 1105 includes one or more servers and one or more storage devices. The storage devices store the computer readable instructions 1082, which may correspond to the example computer readable instructions 800, 900 of FIGS. 8 and/or 9, as described above. The one or more servers of the example software distribution platform 1105 are in communication with a network 1110, which may correspond to any one or more of the Internet and/or any of the example networks 1095 described above. In some examples, the one or more servers are responsive to requests to transmit the software to a requesting party as part of a commercial transaction. Payment for the delivery, sale and/or license of the software may be handled by the one or more servers of the software distribution platform and/or via a third-party payment entity. The servers enable purchasers and/or licensors to download the computer readable instructions 1082 from the software distribution platform 1105. For example, the software, which may correspond to the example computer readable instructions 800, 900 of FIGS. 8 and/or 9, may be downloaded to the example processor platform(s) 1100 (e.g., example connected Edge devices), which is/are to execute the computer readable instructions 1082 to implement the example node 700 of FIG. 7. In some examples, one or more servers of the software distribution platform 1105 are communicatively connected to one or more security domains and/or security devices through which requests and transmissions of the example computer readable instructions 1082 must pass. In some examples, one or more servers of the software distribution platform 1105 periodically offer, transmit, and/or force updates to the software (e.g., the example computer readable instructions 1082 of FIG. 10B) to ensure improvements, patches, updates, etc. are distributed and applied to the software at the end user devices.

In the illustrated example of FIG. 11, the computer readable instructions 1082 are stored on storage devices of the software distribution platform 1105 in a particular format. A format of computer readable instructions includes, but is not limited to a particular code language (e.g., Java, JavaScript, Python, C, C#, SQL, HTML, etc.), and/or a particular code state (e.g., uncompiled code (e.g., ASCII), interpreted code, linked code, executable code (e.g., a binary), etc.). In some examples, the computer readable instructions D182 stored in the software distribution platform 1105 are in a first format when transmitted to the example processor platform(s) 1100. In some examples, the first format is an executable binary in which particular types of the processor platform(s) 1100 can execute. However, in some examples, the first format is uncompiled code that requires one or more preparation tasks to transform the first format to a second format to enable execution on the example processor platform(s) 1100. For instance, the receiving processor platform(s) 1100 may need to compile the computer readable instructions D182 in the first format to generate executable code in a second format that is capable of being executed on the processor platform(s) 1100. In still other examples, the first format is interpreted code that, upon reaching the processor platform(s) 1100, is interpreted by an interpreter to facilitate execution of instructions.

From the foregoing, it will be appreciated that example methods, apparatus and articles of manufacture have been disclosed that enable offloading of execution of a portion of a machine learning model among nodes in an edge computing system. The disclosed methods, apparatus and articles of manufacture improve the efficiency of using a computing device by enabling execution of a first portion of a machine learning model locally, and transmitting intermediate data for further execution of a second portion of the machine learning model at a remote node. In many examples, such intermediate data is smaller in size than the data that is input to the machine learning model, thereby causing bandwidth savings as opposed to if the entire execution of the machine learning model had been offloaded. The disclosed methods, apparatus and articles of manufacture are accordingly directed to one or more improvement(s) in the functioning of a computer.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

Example methods, apparatus, systems, and articles of manufacture to offload execution of a portion of a machine learning model are disclosed herein. Further examples and combinations thereof include the following:
Example 1 includes an apparatus in an edge computing system to offload execution of a portion of a machine learning model memory, and processor circuitry including one or more of at least one of a central processing unit, a graphic processing unit or a digital signal processor, the at least one of the central processing unit, the graphic processing unit or the digital signal processor having control circuitry to control data movement within the processor circuitry, arithmetic and logic circuitry to perform one or more first operations corresponding to instructions, and one or more registers to store a result of the one or more first operations, the instructions in the apparatus, a Field Programmable Gate Array (FPGA), the FPGA including logic gate circuitry, a plurality of configurable interconnections, and storage circuitry, the logic gate circuitry and interconnections to perform one or more second operations, the storage circuitry to store a result of the one or more second operations, or Application Specific Integrated Circuitry (ASIC) including logic gate circuitry to perform one or more third operations, the processor circuitry to perform at least one of the first operations, the second operations or the third operations to instantiate inference interface circuitry to access a first request to execute the machine learning model at a first node, offload controller circuitry to select a first portion of layers of the machine learning model for execution by the first node, the offload controller circuitry to select a second portion of the layers of the machine learning model for execution by a second node separate from the first node, model executor circuitry to execute the first portion of the layers of the machine learning model, and network interface circuitry to transmit a second request for execution of the machine learning model to the second node, the request including an output of the execution of the first portion of the layers of the machine learning model and a layer identification identifying the second portion of the layers of the machine learning model.
Example 2 includes the apparatus of example 1, wherein the offload controller circuitry is further to estimate first resource requirements for execution of respective layers of the machine learning model at the first node, and estimate second resource requirements for execution of the respective layers of the machine learning model at the second node, wherein the selection of the first and second portions of the layers of the machine learning model is based on the estimated first and second resource requirements.
Example 3 includes the apparatus of example 2, wherein the estimated first resource requirements are based on telemetry data of the first node.
Example 4 includes the apparatus of example 3, wherein the telemetry data includes at least one of ambient telemetry data, battery management telemetry data, or communication telemetry data.
Example 5 includes the apparatus of example 3, wherein the estimated resource requirements are based a pattern of telemetry data.
Example 6 includes the apparatus of example 5, wherein the pattern of telemetry data is an expected availability of a power source of the first node.
Example 7 includes the apparatus of example 1, further including serialization circuitry to serialize the output of the execution of the first portion of the layers of the machine learning model, the second request including the serialized output of the execution of the first portion of the layers of the machine learning model.
Example 8 includes the apparatus of example 1, wherein the offload controller circuitry is to select the first and second portions of the layers of the machine learning model based on a service level identified in the request to execute the machine learning model.
Example 9 includes the apparatus of example 1, wherein the first request to execute the machine learning model is received from an edge computing device in the edge computing system.
Example 10 includes the apparatus of example 1, wherein the first node is separate from the second node as a result of the first node and the second node using different power supplies.
Example 11 includes at least one non-transitory computer readable medium comprising instructions that, when executed, cause at least one processor to at least access a first request to execute the machine learning model at a first node in an edge computing system, select a first portion of layers of the machine learning model for execution by the first node, select a second portion of the layers of the machine learning model for execution by a second node in the edge computing system, execute the first portion of the layers of the machine learning model, and transmit a request for execution of the machine learning model to the second node in the edge computing system, the second request including an output of the execution of the first portion of the layers of the machine learning model and a layer identification identifying the second portion of the layers of the machine learning model.
Example 12 includes the at least one non-transitory computer readable medium of example 11, wherein the instructions, when executed, further cause the at least one processor to at least estimate first resource requirements for execution of respective layers of the machine learning model at the first node, and estimate second resource requirements for execution of the respective layers of the machine learning model at the second node, wherein the selection of the first and second portions of the layers of the machine learning model is based on the estimated first and second resource requirements.
Example 13 includes the at least one non-transitory computer readable medium of example 12, wherein the estimated first resource requirements are based on telemetry data of the first node.
Example 14 includes the at least one non-transitory computer readable medium of example 13, wherein the telemetry data includes at least one of ambient telemetry data, battery management telemetry data, or communication telemetry data.
Example 15 includes the at least one non-transitory computer readable medium of example 11, wherein the instructions, when executed, cause the at least one processor to serialize the output of the execution of the machine learning model, the second request including the serialized output of the execution of the first portion of the layers of the machine learning model.
Example 16 includes the at least one non-transitory computer readable medium of example 11, wherein the selection of the first and second portions of the layers of the machine learning model is based on a service level identified in the first request to execute the machine learning model.
Example 17 includes the at least one non-transitory computer readable medium of example 11, wherein the first request to execute the machine learning model is received from an edge computing device in the edge computing system.
Example 18 includes an apparatus for offloading execution of a portion of a machine learning model, the apparatus comprising means for accessing a first request to execute the machine learning model at a first node in an edge computing system, means for selecting a first portion of layers of the machine learning model for execution at the first node, the means for selecting to select a second portion of the layers of the machine learning model for execution at a second node in the edge computing system, means for executing the first portion of the layers of the machine learning model, and means for transmitting a second request for execution of the machine learning model to the second node in the edge computing system, the second request including an output of the execution of the first portion of the layers of the machine learning model and a layer identifier identifying the second portion of the layers of the machine learning model.
Example 19 includes the apparatus of example 18, wherein the means for selecting is further to estimate first resource requirements for execution of respective layers of the machine learning model at the first node, and estimate second resource requirements for execution of the respective layers of the machine learning model at the second node, wherein the selection of the first and second portions of the layers of the machine learning model is based on the estimated first and second resource requirements.
Example 20 includes the apparatus of example 19, wherein the estimated first resource requirements are based on telemetry data of the node.
Example 21 includes the apparatus of example 20, wherein the telemetry data includes at least one of ambient telemetry data, battery management telemetry data, or communication telemetry data.
Example 22 includes the apparatus of example 18, further including means for serializing the output of the execution of the first portion of the layers of the machine learning model, wherein the second request includes the serialized output of the execution of the first portion of the layers of the machine learning model wherein the means for serializing is to compress the output.
Example 23 includes the apparatus of example 18, wherein the means for selecting is to select the first and second portions of the layers of the machine learning model based on a service level identified in the first request to execute the machine learning model.
Example 24 includes the apparatus of example 18, wherein the means for accessing is to receive the first request to execute the machine learning model from an edge computing device in the edge computing system.
Example 25 includes a method for offloading execution of a portion of a machine learning model, the method comprising accessing a first request to execute the machine learning model at a first node in an edge computing system, selecting a first portion of layers of the machine learning model for execution at the first node, selecting a second portion of the layers of the machine learning model for execution at a second node in the edge computing system, executing, using model execution circuitry, the first portion of the layers of the machine learning model, and transmitting a second request for execution of the machine learning model to the second node, the second request including an output output of the execution of the first portion of the layers of the machine learning model and a layer identification identifying the second portion of the layers of the machine learning model.
Example 26 includes the method of example 25, further including estimating first resource requirements for execution of respective layers of the machine learning model at the first node, and estimating second resource requirements for execution of the respective layers of the machine learning model at the second node, wherein the selection of the first and second portions of the layers of the machine learning model is based on the estimated first and second resource requirements.
Example 27 includes the method of example 26, wherein the estimated first resource requirements are based on telemetry data of the node.
Example 28 includes the method of example 27, wherein the telemetry data includes at least one of ambient telemetry data, battery management telemetry data, or communication telemetry data.
Example 29 includes the method of example 25, further including serializing the output of the execution of the first portion of the layers of the machine learning model, wherein the second request includes the serialized output of the execution of the first portion of the layers of the machine learning model.
Example 30 includes the method of example 25, wherein the selection of the first and second portions of the layers of the machine learning model is based on a service level identified in the first request to execute the machine learning model.
Example 31 includes the method of example 25, wherein the first request to execute the machine learning model is received from an edge computing device in the edge computing system.

The following claims are hereby incorporated into this Detailed Description by this reference, with each claim standing on its own as a separate embodiment of the present disclosure.

## Claims

1. An apparatus in an edge computing system to offload execution of a portion of a machine learning model:
memory; and
processor circuitry including one or more of:
at least one of a central processing unit, a graphic processing unit or a digital signal processor, the at least one of the central processing unit, the graphic processing unit or the digital signal processor having control circuitry to control data movement within the processor circuitry, arithmetic and logic circuitry to perform one or more first operations corresponding to instructions, and one or more registers to store a result of the one or more first operations, the instructions in the apparatus;
a Field Programmable Gate Array (FPGA), the FPGA including logic gate circuitry, a plurality of configurable interconnections, and storage circuitry, the logic gate circuitry and interconnections to perform one or more second operations, the storage circuitry to store a result of the one or more second operations; or
Application Specific Integrated Circuitry (ASIC) including logic gate circuitry to perform one or more third operations;
the processor circuitry to perform at least one of the first operations, the second operations or the third operations to instantiate:
inference interface circuitry to access a first request to execute the machine learning model at a first node;
offload controller circuitry to select a first portion of layers of the machine learning model for execution by the first node, the offload controller circuitry to select a second portion of the layers of the machine learning model for execution by a second node separate from the first node;
model executor circuitry to execute the first portion of the layers of the machine learning model; and
network interface circuitry to transmit a second request for execution of the machine learning model to the second node, the request including an output of the execution of the first portion of the layers of the machine learning model and a layer identification identifying the second portion of the layers of the machine learning model.

2. The apparatus of claim 1, wherein the offload controller circuitry is further to estimate first resource requirements for execution of respective layers of the machine learning model at the first node, and estimate second resource requirements for execution of the respective layers of the machine learning model at the second node, wherein the selection of the first and second portions of the layers of the machine learning model is based on the estimated first and second resource requirements.

3. The apparatus of claim 2, wherein the estimated first resource requirements are based on telemetry data of the first node.

4. The apparatus of claim 3, wherein the telemetry data includes at least one of ambient telemetry data, battery management telemetry data, or communication telemetry data.

5. The apparatus of claim 3, wherein the estimated resource requirements are based a pattern of telemetry data.

6. The apparatus of claim 5, wherein the pattern of telemetry data is an expected availability of a power source of the first node.

7. The apparatus of claim 1, further including serialization circuitry to serialize the output of the execution of the first portion of the layers of the machine learning model, the second request including the serialized output of the execution of the first portion of the layers of the machine learning model.

8. The apparatus of claim 1, wherein the offload controller circuitry is to select the first and second portions of the layers of the machine learning model based on a service level identified in the request to execute the machine learning model.

9. The apparatus of claim 1, wherein the first request to execute the machine learning model is received from an edge computing device in the edge computing system.

10. The apparatus of any one of claims 1 through 9, wherein the first node is separate from the second node as a result of the first node and the second node using different power supplies.

11. An apparatus for offloading execution of a portion of a machine learning model, the apparatus comprising:
means for accessing a first request to execute the machine learning model at a first node in an edge computing system;
means for selecting a first portion of layers of the machine learning model for execution at the first node, the means for selecting to select a second portion of the layers of the machine learning model for execution at a second node in the edge computing system;
means for executing the first portion of the layers of the machine learning model; and
means for transmitting a second request for execution of the machine learning model to the second node in the edge computing system, the second request including an output of the execution of the first portion of the layers of the machine learning model and a layer identifier identifying the second portion of the layers of the machine learning model.

12. The apparatus of claim 11, wherein the means for selecting is further to estimate first resource requirements for execution of respective layers of the machine learning model at the first node, and estimate second resource requirements for execution of the respective layers of the machine learning model at the second node, wherein the selection of the first and second portions of the layers of the machine learning model is based on the estimated first and second resource requirements.

13. The apparatus of claim 12, wherein the estimated first resource requirements are based on telemetry data of the node.

14. A method for offloading execution of a portion of a machine learning model, the method comprising:
accessing a first request to execute the machine learning model at a first node in an edge computing system;
selecting a first portion of layers of the machine learning model for execution at the first node;
selecting a second portion of the layers of the machine learning model for execution at a second node in the edge computing system;
executing, using model execution circuitry, the first portion of the layers of the machine learning model; and
transmitting a second request for execution of the machine learning model to the second node, the second request including an output of the execution of the first portion of the layers of the machine learning model and a layer identification identifying the second portion of the layers of the machine learning model.

15. Machine-readable storage including machine-readable instructions, when executed, to implement a method or realize an apparatus as claimed in any preceding claim.
